(19) **Europäisches Patentamt / European Patent Office / Office européen des brevets**

(11) **EP 4 761 190 A1**

(12) **EUROPEAN PATENT APPLICATION**
published in accordance with Art. 153(4) EPC

(43) Date of publication:
**17.06.2026 Bulletin 2026/25**

(21) Application number: **23950226.3**

(22) Date of filing: **31.08.2023**

(51) International Patent Classification (IPC):
**H04L 25/02** (2006.01)

(52) Cooperative Patent Classification (CPC):
**H04L 25/02**

(86) International application number:
**PCT/CN2023/116297**

(87) International publication number:
**WO 2025/043643 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **HUAWEI TECHNOLOGIES CO., LTD.
Shenzhen 518129 (CN)**

(72) Inventors:
- **JIANG, Yisheng
  Shenzhen, Guangdong 518129 (CN)**
- **BI, Xiaoyan
  Shenzhen, Guangdong 518129 (CN)**
- **JIANG, Chenglong
  Shenzhen, Guangdong 518129 (CN)**
- **LIU, Lei
  Shenzhen, Guangdong 518129 (CN)**
- **LIU, Yong
  Shenzhen, Guangdong 518129 (CN)**

(74) Representative: **Grünecker Patent- und
Rechtsanwälte
PartG mbB
Leopoldstraße 4
80802 München (DE)**

(54) **COMMUNICATION METHOD, APPARATUS AND SYSTEM**

(57) This application provides a communication method, apparatus, and system. The method can meet a flexible requirement of the communication apparatus for channel estimation. The method includes: A first device obtains a demodulation reference signal and first information indicating a channel estimation policy, and performs channel estimation based on the channel estimation policy and the demodulation reference signal. In this way, the foregoing solution can support the first device in flexibly performing channel estimation based on different channel estimation policies, so that a channel estimation result obtained by the first device by performing channel estimation based on the channel estimation policy indicated by the first information can better match a channel condition, to support subsequent more accurate data transmission.

– 200 –

FIG. 2

**Description**

**TECHNICAL FIELD**

This application relates to the field of communication technologies, and more specifically, to a communication method, apparatus, and system.

**BACKGROUND**

Multiple-input multiple-output (multiple-input multiple-output, MIMO) is a core technology of a 5th generation (5th generation, 5G) communication system. In the multiple-input multiple-output, a plurality of transmit antennas at a transmit end and a plurality of receive antennas at a receive end transmit and receive signals respectively, to implement multi-transmit and multi-receive, thereby improving communication quality.

With continuous evolution of a MIMO system, a quantity of antennas of a communication device is further increased, and channel information is obtained more accurately, so that a larger quantity of transmission layers can be supported to improve spectral efficiency of the MIMO system. As the quantity of transmission layers is increased, data transmission imposes a higher requirement on accuracy of channel estimation.

However, a current channel estimation solution cannot adapt to different channel conditions. In other words, the existing channel estimation solution cannot meet a flexible requirement of a communication apparatus for channel estimation.

**SUMMARY**

This application provides a communication method, apparatus, and system, to meet a flexible requirement of the communication apparatus for channel estimation.

According to a first aspect, a communication method is provided, including: obtaining first information, where the first information indicates a channel estimation policy; receiving a demodulation reference signal; and performing channel estimation based on the channel estimation policy and the demodulation reference signal (demodulation reference signal, DMRS).

The solution in the first aspect may be applied to a first device side, and may be performed by a first device, or may be performed by a chip, an integrated circuit, or the like configured to perform a function of a first device. For ease of description, the following uses the first device as an example for description. The first device may be a terminal device, or may be a network device. This is not limited.

Before channel estimation is performed, the first device may determine, based on the first information, the channel estimation policy that needs to be used, and perform channel estimation based on the channel estimation policy and the DMRS. Compared with an existing solution in which channel estimation is performed based on a fixed channel estimation policy, the foregoing solution can support the first device in flexibly performing channel estimation based on different channel estimation policies, so that a channel estimation result obtained by the first device by performing channel estimation based on the channel estimation policy indicated by the first information can better match a channel condition, thereby supporting subsequent more accurate data transmission.

In a possible implementation, obtaining the first information includes: receiving the first information from a second device.

In this way, the first device can receive the first information from the second device, to determine the channel estimation policy for channel estimation.

In a possible implementation, obtaining the first information includes: determining the first information based on a mapping relationship between a first parameter and the channel estimation policy and the first parameter.

It may be understood that the first parameter is associated with determining of the channel estimation policy. In other words, there is an association relationship between the first parameter and the channel estimation policy.

In this way, the first device can determine the first information by itself. This can reduce overheads of signaling interaction between the first device and the second device.

In a possible implementation, the first parameter includes at least one of the following: a quantity of transmit antennas of the second device, a quantity of receive antennas of the first device, a quantity of ports, a port sequence number, or a frequency domain density of the demodulation reference signal.

In this way, the first device can determine the foregoing channel estimation policy based on one or more of the foregoing parameters. The parameter may be preconfigured in the first device, or may be sent by the second device to the first device. This is not limited herein.

In a possible implementation, the method further includes: obtaining a pattern of the demodulation reference signal; and performing channel estimation based on the channel estimation policy and the demodulation reference signal includes: obtaining a channel interpolation parameter of the demodulation reference signal based on the channel estimation policy and the pattern of the demodulation reference signal; and performing channel estimation based on the channel interpolation parameter.

In this way, the first device can complete channel estimation measurement.

In a possible implementation, the method further includes: sending second information to the second device, where the second information indicates that the channel estimation policy is supported.

In this way, the second device can determine that the first device supports the foregoing channel estimation policy, and can further indicate the channel estimation policy to the first device.

In a possible implementation, the channel estimation policy includes either of the following: a conventional channel estimation policy and a manifold-based channel estimation policy.

In this way, the first device can support more types of channel estimation policies, and can meet a flexible requirement of the first device for channel estimation.

According to a second aspect, a communication method is provided, including: sending first information to a first device, where the first information indicates a channel estimation policy; and sending a demodulation reference signal to the first device. The channel estimation policy and the demodulation reference signal are used by the first device to perform channel estimation.

The solution in the second aspect may be applied to a second device side, and may be performed by a second device, or may be performed by a chip, an integrated circuit, or the like configured to perform a function of a second device. For ease of description, the following uses the first device as an example for description. The second device may be a terminal device, or may be a network device. This is not limited.

Specifically, the second device may send the first information to the first device, and the first device determines an appropriate channel estimation policy based on an indication of the second device, and may complete channel estimation based on the channel estimation policy, to meet a flexible requirement of the first device for channel estimation.

In a possible implementation, the method further includes: obtaining a first parameter; and determining the first information based on a mapping relationship between the first parameter and the channel estimation policy and the first parameter.

Specifically, the first information is determined by the second device based on the mapping relationship between the first parameter and the channel estimation policy and the first parameter, and the first parameter may include a parameter belonging to the second device, or may include a parameter belonging to the first device. This is not limited.

In a possible implementation, the first parameter includes at least one of the following: a quantity of transmit antennas of a second device, a quantity of receive antennas of the first device, a quantity of ports, a port sequence number, or a frequency domain density of the demodulation reference signal.

It may be understood that the foregoing "quantity of transmit antennas" is the quantity of transmit antennas of the second device, the foregoing "quantity of receive antennas" is the quantity of receive antennas of the first device, and the foregoing "quantity of ports" is a quantity of ports determined by the second device. For a single user, a quantity of ports used by the first device is equal to a quantity of ports configured by the second device. For a plurality of users, a quantity of ports used by the first device is less than a quantity of ports configured by the second device.

In a possible implementation, the method further includes: receiving second information from the first device, where the second information indicates that the channel estimation policy is supported.

In this way, the second device can determine that the first device can support the foregoing channel estimation policy, and can further indicate the channel estimation policy to the first device.

In a possible implementation, the channel estimation policy includes either of the following: a conventional channel estimation policy and a manifold-based channel estimation policy.

In this way, the first device can support more types of channel estimation policies, and can meet a flexible requirement of the first device for channel estimation.

According to a third aspect, a communication system is provided, including a first device and a second device. The first device is configured to obtain first information, where the first information indicates a channel estimation policy. The second device is configured to send a received demodulation reference signal to the first device. The first device is configured to receive the demodulation reference signal. The first device is configured to perform channel estimation based on the channel estimation policy and the demodulation reference signal.

In a possible implementation, the second device is configured to send the first information to the first device. The first device is configured to receive the first information.

In a possible implementation, the first device is further configured to determine the first information based on a mapping relationship between a first parameter and the channel estimation policy and the first parameter.

In a possible implementation, the first parameter includes at least one of the following: a quantity of transmit antennas of the second device, a quantity of receive antennas of the first device, a quantity of ports, a port sequence number, or a frequency domain density of the demodulation reference signal.

In a possible implementation, the first device is further configured to obtain a pattern of the demodulation reference signal. The first device is further configured to obtain a channel interpolation parameter of the demodulation reference signal based on the channel estimation policy and the pattern of the demodulation reference signal. The first device is further configured to perform channel estimation based on the channel interpolation parameter.

In a possible implementation, the first device is further configured to send second information to the second device, where the second information indicates that the channel estimation policy is supported. The second device is further configured to receive the second information.

In a possible implementation, the channel estimation policy includes either of the following: a conventional channel estimation policy and a manifold-based channel estimation policy.

According to a fourth aspect, a communication apparatus is provided. The communication apparatus may be a network device or a terminal device, or may be a device, a module, or the like configured to perform a function of a network device or a terminal device.

In a possible implementation, the communication apparatus may include modules or units that one-to-one correspond to the method/operations/steps/actions described in the first aspect. The module or unit may be implemented by a hardware circuit, software, or a combination of a hardware circuit and software.

According to a fifth aspect, a communication apparatus is provided. The communication apparatus may be a terminal device or a network device, or may be a device, a module, or the like configured to perform a function of a terminal device or a network device.

In a possible implementation, the communication apparatus may include modules or units that one-to-one correspond to the method/operations/steps/actions described in the second aspect. The module or unit may be implemented by a hardware circuit, software, or a combination of a hardware circuit and software.

According to a sixth aspect, a communication apparatus is provided, including a processor. The processor is configured to enable, by executing a computer program or instructions or via a logic circuit, the communication apparatus to perform the method in any one of the first aspect and the possible implementations of the first aspect, or the communication apparatus to perform the method in any one of the second aspect and the possible implementations of the second aspect.

In a possible implementation, the communication apparatus further includes a memory, configured to store the computer program or the instructions.

In a possible implementation, the communication apparatus further includes a communication interface, configured to input and/or output a signal.

According to a seventh aspect, a communication apparatus is provided, including a logic circuit and an input/output interface. The input/output interface is configured to input and/or output a signal. The logic circuit is configured to perform the method in any one of the first aspect and the possible implementations of the first aspect, or the logic circuit is configured to perform the method in any one of the second aspect and the possible implementations of the second aspect.

According to an eighth aspect, a computer-readable storage medium is provided. The computer-readable storage medium stores a computer program or instructions. When the computer program or the instructions are run on a computer, the method in any one of the first aspect and the possible implementations of the first aspect is performed, or the method in any one of the second aspect and the possible implementations of the second aspect is performed.

According to a ninth aspect, a computer program product is provided, including instructions. When the instructions are run on a computer, the method in any one of the first aspect and the possible implementations of the first aspect is performed, or the method in any one of the second aspect and the possible implementations of the second aspect is performed.

For descriptions of beneficial effect of any one of the third aspect to the ninth aspect, refer to descriptions of beneficial effect of the first aspect and the second aspect.

**BRIEF DESCRIPTION OF DRAWINGS**

FIG. 1 is a diagram of a communication system 100 to which an embodiment of this application is applicable;

FIG. 2 is a schematic interaction flowchart of a communication method 200 according to an embodiment of this application;

FIG. 3 is a schematic interaction flowchart of a communication method 300 according to an embodiment of this application.

FIG. 4 is a diagram of channel estimation according to an embodiment of this application;

FIG. 5 is another diagram of channel estimation according to an embodiment of this application;

FIG. 6 is a schematic interaction flowchart of a communication method 600 according to an embodiment of this application;

FIG. 7 is a block diagram of a communication apparatus 700 according to an embodiment of this application;

FIG. 8 is a block diagram of a communication apparatus 800 according to an embodiment of this application;

FIG. 9 is a block diagram of a communication apparatus 900 according to an embodiment of this application;

FIG. 10 is a block diagram of a communication apparatus 1000 according to an embodiment of this application; and

FIG. 11 is a block diagram of a communication apparatus 1100 according to an embodiment of this application.

## DESCRIPTION OF EMBODIMENTS

For ease of understanding embodiments of this application, the following descriptions are provided first.

1. In this application, unless otherwise specified, "a plurality of" means two or more.

2. In this application, unless otherwise specified or there is a logic conflict, terms and/or descriptions in different embodiments are consistent and may be mutually referenced, and technical features in different embodiments may be combined based on an internal logic relationship thereof, to form a new embodiment.

3. Various numbers in this application are merely used for differentiation for ease of description, but are not used to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if existent) are intended to distinguish between similar objects, but do not necessarily indicate a specific order or sequence. Data used in such a way is interchangeable in appropriate circumstances, so that embodiments described herein can be implemented in other orders than the order illustrated or described herein.

In addition, any embodiment or design scheme described as an "example" or "for example" in this application should not be explained as being more preferred or having more advantages than another embodiment or design scheme. Exactly, use of the word such as "example" or "for example" is intended to present a related concept in a specific manner for ease of understanding.

4. The terms "include", "have", and any variants thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.

5. In this application, the term "preconfiguration" may include predefinition, for example, definition in a protocol. "Predefinition" may be implemented by pre-storing corresponding code or a corresponding table in a device, or may be implemented in another manner of indicating related information. A specific implementation of "predefinition" is not limited in this application.

6. The term "store" or "save" in this application may mean storing in one or more memories. The one or more memories may be separately disposed, or may be integrated into an encoder, a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited.

7. The term "protocol" in this application may be a standard protocol in the communication field, for example, may include a 4th generation (4th generation, 4G) network protocol, a 5th generation (5th generation, 5G) network protocol, a new radio (new radio, NR) protocol, a 5.5G network protocol, a 6th generation (6th generation, 6G) network protocol, and a related protocol applied to a future communication system. This is not limited in this application.

8. Arrows or blocks shown by dashed lines in diagrams of accompanying drawings in the specification of this application indicate optional steps or optional modules.

9. In this application, unless otherwise specified, "/" indicates an "or" relationship between associated objects. For example, A/B may indicate A or B. "And/or" in this application describes only an association relationship between associated objects and indicates that three relationships may exist. For example, A and/or B may indicate the following three cases: Only A exists, both A and B exist, and only B exists, where A and B may be singular or plural.

10. "Sending" and "receiving" in embodiments of this application indicate signal transmission directions. For example, "sending information to XX" may be understood as that a destination end of the information is XX, and may include direct sending through an air interface, or may include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may also be understood as "output" of a chip interface, and "receiving" may also be understood as "input" of the chip interface.

In other words, sending and receiving may be performed between devices, for example, between a network device and a terminal device, or may be performed inside a device, for example, sending or receiving is performed between parts, modules, chips, software modules, or hardware modules inside the device through a bus, a cable, or an interface.

It may be understood that necessary processing, such as coding and modulation, may be performed on the information between the source end at which the information is sent and the destination end, but the destination end may understand valid information from the source end. Similar descriptions in this application may be understood similarly, and details are not described again.

11. In embodiments of this application, "indication" may include a direct indication and an indirect indication, or may include an explicit indication and an implicit indication. Information indicated by a piece of information (indication information described below) is referred to as to-be-indicated information. In a specific implementation process, the to-be-indicated information may be indicated in a plurality of manners, for example, but not limited to, a manner of directly indicating the to-be-indicated information, for example, the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may be indicated in a pre-agreed (for example, predefined in a protocol) arrangement order of information, to reduce indication overheads to some extent. A specific indication manner is not limited in this application. It may be understood that, for a sender of the indication information, the indication information may indicate the to-be-indicated information, and for a receiver of the indication information, the indication information may be used to determine the to-be-indicated information.

First, a communication system to which an embodiment of this application is applicable is described.

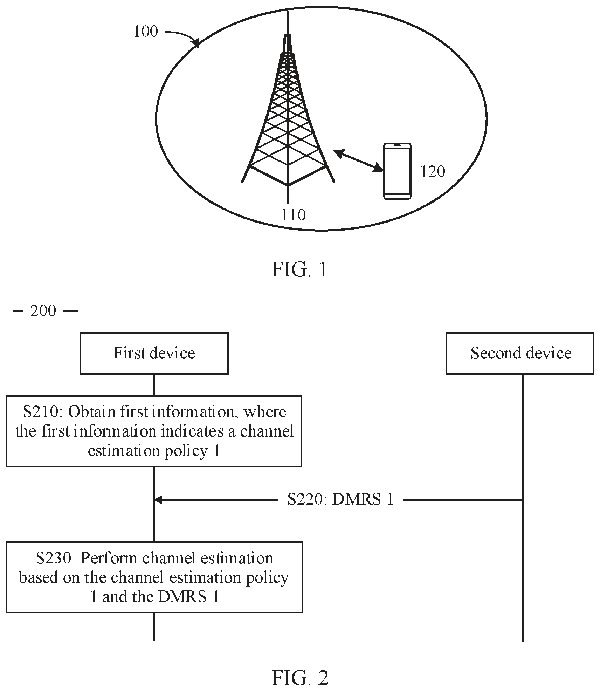

FIG. 1 is a diagram of a communication system 100 to which an embodiment of this application is applicable. As shown in FIG. 1, the communication system 100 includes a network device 110 and a terminal device 120.

The terminal device 120 is a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device 120 may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device, or another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in this application.

A communication apparatus configured to implement a function of the terminal device 120 may be a terminal device, or may be an apparatus that can support the terminal device in implementing the function, for example, a chip system. The apparatus may be mounted in the terminal device or may be used together with the terminal device. In this application, the chip system may include a chip, or may include a chip and another discrete component.

The network device 110 is a device having a wireless transceiver function, and is configured to communicate with the terminal device 120. The network device 110 may be a node in a radio access network (radio access network, RAN), and may be referred to as a base station, or may be referred to as a RAN node. The network device may be an evolved NodeB (evolved NodeB, eNB or eNodeB) in long term evolution (long term evolution, LTE), a base station in a 5G network like a gNodeB (gNB), a base station in a public land mobile network (public land mobile network, PLMN) evolved after 5G, a broadband network gateway (broadband network gateway, BNG), an aggregation switch, a 3rd generation partnership project (3rd generation partnership project, 3GPP) access device, or the like.

The RAN may be configured as a RAN defined in a 3GPP protocol, an open radio access network (open radio access network, O-RAN), a cloud access network (cloud radio access network, C-RAN), or the like. The network device 110 may further include base stations in various forms, for example, a macro base station, a micro base station (also referred to as a small cell), a relay station, a transmission point (transmitting and receiving point, TRP), a transmitting point (transmitting point, TP), a mobile switching center, a device that functions as a base station in device-to-device (device-to-device, D2D) communication, vehicle-to-everything (vehicle-to-everything, V2X) communication, and machine-to-machine (machine-to-machine, M2M) communication, a network device in a non-terrestrial network (non-terrestrial network, NTN), and the like. This is not specifically limited.

The network device 110 may further include a network element or a module that implements some functions of the base station, for example, include one or more of the following: a central unit (central unit, CU), a distributed unit (distributed unit, DU), or a radio unit (radio unit, RU). Optionally, the CU may be further divided into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

A communication apparatus configured to implement a function of the network device 110 may be a network device, or may be an apparatus that can support the network device in implementing the function, for example, a chip system. The apparatus may be mounted in the network device or used together with the network device. In embodiments of this application, the chip system may include a chip, or may include a chip and another discrete component.

In embodiments of this application, the communication system 100 may be the following system: a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G system, a 6G system, or an NTN system, for example, an inter-satellite communication system or a satellite communication system. The satellite communication system includes a satellite base station and a terminal device. The satellite base station provides a communication service for the terminal device. The satellite base station may also communicate with a terrestrial base station. A satellite may serve as a base station, or may serve as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The communication system 100 may alternatively be a terrestrial cellular communication system, a high altitude platform station (high altitude platform station, HAPS) communication system, a V2X system, an integrated access and backhaul (integrated access and backhaul, IAB) system, a reconfigurable intelligent surface (reconfigurable intelligent surface, RIS) communication system, or the like. This is not limited.

Specifically, a typical current channel estimation solution is to use a Wiener filter, and the filter is classified into an ideal Wiener filter and an actual Wiener filter. The ideal Wiener filter assumes that the terminal device learns of complete parameters (for example, a quantity of channel multipaths, a delay of each path, and power) of a channel model, and the actual Wiener filter assumes that a channel delay power profile meets specific distribution (for example, negative exponential distribution). Within a range allowed by a channel frequency domain coherence bandwidth, interpolation filtering performance is limited by a frequency domain density of a reference signal (reference signal, RS).

As a quantity of transport streams, a quantity of transmit antennas, and a quantity of receive antennas are increased, if the foregoing channel estimation solution is always used to perform channel estimation, different channel conditions cannot be adapted to. For example, some channel conditions require the communication apparatus to perform channel estimation based on the foregoing channel estimation solution, and some channel conditions require the communication apparatus to perform channel estimation based on another channel estimation policy.

In conclusion, the communication apparatus needs to flexibly perform channel estimation based on different channel estimation policies. In view of this, this application provides a communication method, apparatus, and system, to meet a flexible requirement of the communication apparatus for channel estimation.

For ease of understanding of the technical solutions in embodiments of this application, the following first briefly describes some concepts in this application.

1. DMRS

A DMRS can be used to estimate an equivalent channel matrix undergone by a data channel (for example, a physical downlink shared channel (physical downlink shared channel, PDSCH) or a PUSCH) or a control channel (for example, a physical downlink control channel (physical downlink control channel, PDCCH)), to detect and demodulate a data signal.

The PDSCH is used as an example. A DMRS vector sent by a transmit end is **s**, and a data signal vector is **x.** A same precoding operation (multiplying by a same precoding matrix P) is performed on the DMRS and the data signal. The DMRS vector and the data signal vector received by a receive end are respectively represented as follows:

Data signal vector: $\mathbf{y=HPx+n=\tilde{H}x+n}$ (1)
DMRS vector: $\mathbf{r=HPs+n=\tilde{H}s+n}$ (2)

It can be learned from formulas (1) and (2) that equivalent channels through which the data signal and the DMRS pass are both $\tilde{H}$ ($\tilde{H}$=HP, where **H is a channel matrix).** The receive end obtains estimation of the equivalent channel $\tilde{H}$ according to a channel estimation algorithm (for example, minimum mean square error (minimum mean square error, MMSE) channel estimation) based on the known DMRS vector s, to complete demodulation of the data signal.

Usually, one DMRS port corresponds to one transmission layer (also referred to as a stream, a quantity of spatial layers, or a rank). For MIMO transmission with a quantity R of transmission layers, a quantity of DMRS ports is R. To ensure quality of channel estimation, different DMRS ports are orthogonal to each other. To reduce mutual interference, resources respectively corresponding to different DMRS ports may be mapped to a preset time-frequency resource in a frequency division multiplexing, time division multiplexing, or code division multiplexing manner. For details, refer to the following descriptions.

2. DMRS configuration type

Specifically, a DMRS configuration type mainly includes a type 1 (Type 1) and a type 2 (Type 2). The type 1 supports a maximum of eight orthogonal DMRS ports, and the type 2 supports a maximum of 12 orthogonal DMRS ports. For details, refer to Table 1 and Table 2.

Table 1 Type 1 DMRS parameter values

| p | $\lambda$ | $\Delta$ | $w_f(k')$ | | $w_t(l')$ | |
|---|---|---|---|---|---|---|
| | | | k' = 0 | k' = 1 | l' = 0 | l' = 1 |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

Table 2 Type 2 DMRS parameter values

| p | $\lambda$ | $\Delta$ | $w_f(k')$ | | $w_t(l')$ | |
|---|---|---|---|---|---|---|
| | | | k' = 0 | k' = 1 | l' = 0 | l' = 1 |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

As shown in Table 1 and Table 2, p is an index of a DMRS port, $\lambda$ is an index of a code division multiplexing (code division multiplexing, CDM) group to which the DMRS port belongs, $\Delta$ is a frequency domain offset, and a value of $\Delta$ is

related to different CDM groups. DMRS ports in a same CDM group occupy a same time-frequency resource, but orthogonal cover code (Orthogonal Cover Code, OCC) sequences are different (OCC may be determined based on $w_f(k')$ and $w_t(l')$). For a single symbol, the type 1 supports a maximum of four DMRS ports, and one DMRS resource occupies one orthogonal frequency division multiplexing (orthogonal frequency division multiplexing, OFDM) symbol. The four DMRS ports are divided into a CDM group #0 and a CDM group #1. The CDM group #0 includes a port #0 (for example, p=1000 in Table 2) and a port #1 (for example, p=1001 in Table 2), and the CDM group #1 includes a port #2 (for example, p=1002 in Table 2) and a port #3 (for example, p=1003 in Table 2). DMRS ports in a same CDM group are mapped to a same time-frequency resource, but may be distinguished based on OCC sequences, to ensure orthogonality between the DMRS ports in the CDM group.

For example, the port #0 and the port #1 are located in a same resource element (resource element, RE), and resource mapping is performed in a comb manner in frequency domain. In other words, adjacent frequency domain resources occupied by the port #0 and the port #1 are separated by one subcarrier. For one DMRS port, two adjacent occupied REs correspond to one OCC sequence with a length of 2. For example, for a subcarrier 0 and a subcarrier 2, the port#0 and the port#1 use a group of OCC sequences (+1+1/+1-1) with a length of 2. Similarly, the port#2 and the port#3 are located in a same RE, and are mapped, in a comb manner in frequency domain, to an RE that is not occupied by the port#0 and the port#1. For a subcarrier 1 and a subcarrier 3, the port#2 and the port#3 use a group of OCC codeword sequences (+1+1 and +1-1) with a length of 2.

For ease of understanding and description, the following describes the communication method in embodiments of this application by using interaction between a first device and a second device as an example. However, this shall not constitute any limitation on an execution body of the communication method in embodiments of this application. For example, the first device may be replaced with a component (for example, a circuit, a chip, or a chip system) disposed in the first device, and the second device may be replaced with a component (for example, a circuit, a chip, or a chip system) disposed in the second device. The first device may be the terminal device 120 or the network device 110, the second device may be the network device 110 or the terminal device 120, and the first device and the second device are not both the network device 110.

The following describes the communication method in embodiments of this application.

FIG. 2 is a schematic interaction flowchart of a communication method 200 according to an embodiment of this application. As shown in FIG. 2, the method 200 includes the following steps.

S210: A first device obtains first information, where the first information indicates a channel estimation policy 1.

Specifically, that the first device obtains the first information may be: A second device sends the first information to the first device. In this way, the first device can receive the first information from the second device, to determine the channel estimation policy for channel estimation. Alternatively, the first device determines the first information. For the latter, in a possible implementation, this application supports establishing a mapping relationship between the channel estimation policy and a first parameter. The first device or the second device determines the first information based on the mapping relationship between the first parameter and the channel estimation policy and the first parameter. This can reduce overheads of signaling interaction between the first device and the second device.

Further, the first parameter may be any one of the following: a quantity of transmit antennas of the second device, a quantity of receive antennas of the first device, a quantity of ports, a port sequence number, a frequency domain density of a DMRS, or a quantity of multi-user (multi-user, MU) terminal devices. The foregoing "quantity of transmit antennas" is the quantity of transmit antennas of the second device, the foregoing "quantity of receive antennas" is the quantity of receive antennas of the first device, and the foregoing "quantity of ports" is a quantity of ports determined by the second device. For a single user, a quantity of ports used by the first device is equal to a quantity of ports configured by the second device. For a plurality of users, a quantity of ports used by the first device is less than a quantity of ports configured by the second device. For the mapping relationship between the first parameter and the channel estimation policy, refer to Table 3 to Table 8. Content shown in Table 3 to Table 8 is merely an example, and is not used as a final limitation.

Table 3

| First parameter | Channel estimation policy |
|---|---|
| Quantity of transmit antennas of the second device≤64 | Channel estimation policy a |
| 64<Quantity of transmit antennas of the second device<256 | Channel estimation policy b |
| Quantity of transmit antennas of the second device≥256 | Channel estimation policy c |

As described in Table 3, when the first parameter is the quantity of transmit antennas of the second device, different quantities of transmit antennas of the second device are associated with different channel estimation policies. For example, when the quantity of transmit antennas of the second device is less than or equal to 64, the quantity of transmit antennas of the second device is associated with the channel estimation policy a; when the quantity of transmit antennas of the second device is greater than 64 and less than 256, the quantity of transmit antennas of the second device is associated with the channel estimation policy b; or when the quantity of transmit antennas of the second device is greater than or equal to 256, the quantity of transmit antennas of the second device is associated with the channel estimation policy c. The channel estimation policy a, the channel estimation policy b, and the channel estimation policy c are different channel estimation policies.

Table 4

| First parameter | Channel estimation policy |
| --- | --- |
| Quantity of receive antennas of the first device≤8 | Channel estimation policy a |
| Quantity of receive antennas of the first device>8 | Channel estimation policy b |

As described in Table 4, when the first parameter is the quantity of receive antennas of the first device, different quantities of receive antennas of the first device are associated with different channel estimation policies. For example, when the quantity of receive antennas of the first device is less than or equal to 8, the quantity of receive antennas of the first device is associated with the channel estimation policy a; or when the quantity of receive antennas of the first device is greater than 8, the quantity of receive antennas of the first device is associated with the channel estimation policy b.

It should be noted that, when the first parameter includes the quantity of transmit antennas of the second device, the quantity of transmit antennas of the second device may be preconfigured in the first device, and the first device may directly determine the channel estimation policy 1 based on the quantity of transmit antennas of the second device. Alternatively, the second device may send the quantity of transmit antennas of the second device to the first device, and the first device determines the channel estimation policy 1 based on the quantity of transmit antennas of the second device sent by the second device. When the second device sends the quantity of transmit antennas of the second device to the first device, a specific sequence of this step is not limited in this application. The step may be performed before the first device obtains the first information, or may be performed after the first device obtains the first information and before the channel estimation policy is determined. This is not limited herein. Similarly, the second device determines the channel estimation policy based on the first parameter. When the first parameter includes the quantity of receive antennas of the first device, the second device may obtain the quantity of receive antennas of the first device in various manners. This is not limited in this application.

Table 5

| First parameter | Channel estimation policy |
| --- | --- |
| Quantity of ports≤24 | Channel estimation policy a |
| Quantity of ports>24 | Channel estimation policy b |

As described in Table 5, when the first parameter is the quantity of ports, different quantities of ports are associated with different channel estimation policies. For example, when the quantity of ports is less than or equal to 24, the quantity of ports is associated with the channel estimation policy a; or when the quantity of ports is greater than 24, the quantity of ports is associated with the channel estimation policy b.

Table 6

| First parameter | Channel estimation policy |
| --- | --- |
| Port sequence number∈{0, 3} | Channel estimation policy a |
| Port sequence number∈{0, N-1} | Channel estimation policy b |

As described in Table 6, when the first parameter is the port sequence number, different port sequence numbers are associated with different channel estimation policies. For example, when the port sequence number∈{0, 3}, the port sequence number is associated with the channel estimation policy a; or when the port sequence number∈{0, N-1}, the port sequence number is associated with the channel estimation policy b.

Table 7

| First parameter | Channel estimation policy |
|---|---|
| Frequency domain density of the DMRS≥1 resource element (resource element, RE)/resource block (resource block, RB) | Channel estimation policy b |
| Frequency domain density of the DMRS<1 RE/RB | Channel estimation policy a |

As described in Table 7, when the first parameter is the frequency domain density of the DMRS, different frequency domain densities of the DMRS are associated with different channel estimation policies. For example, when the frequency domain density of the DMRS is greater than or equal to 1 RE/RB, the frequency domain density of the DMRS is associated with the channel estimation policy b; or when the frequency domain density of the DMRS is less than 1 RE/RB, the frequency domain density of the DMRS is associated with the channel estimation policy a.

Table 8

| First parameter | Channel estimation policy |
|---|---|
| Quantity of MU terminal devices≤4 | Channel estimation policy b |
| Quantity of MU terminal devices>4 | Channel estimation policy a |

As described in Table 8, when the first parameter is the quantity of MU terminal devices, different quantities of MU terminal devices are associated with different channel estimation policies. For example, when the quantity of MU terminal devices is less than or equal to 4, the quantity of MU terminal devices is associated with the channel estimation policy a; or when the quantity of MU terminal devices is greater than 4, the quantity of MU terminal devices is associated with the channel estimation policy b.

The channel estimation policy a may be a conventional channel estimation policy, and the channel estimation policy b may be a manifold-based channel estimation policy. The conventional channel estimation policy includes but is not limited to Wiener filtering interpolation (which may further include an existing channel estimation solution). In addition, the manifold-based channel estimation policy is to perform channel estimation based on a manifold method. For specific descriptions, refer to the following description. Details are not described herein. Compared with the conventional channel estimation policy, in the manifold-based channel estimation policy, it is assumed that a high-dimension DMRS channel continuously changes in frequency domain, and interpolation is performed in high-dimension space. This can improve channel estimation effect at a low frequency domain density.

In addition, it may be understood that, when the channel estimation policy is the conventional channel estimation policy or the manifold-based channel estimation policy, the first device may support more types of channel estimation policies, and can meet a flexible requirement of the first device for channel estimation.

The channel estimation policy 1 may be the channel estimation policy a, or may be the channel estimation policy b. This is not limited. The first parameter may alternatively be another parameter that is not mentioned. To be specific, this application supports establishing the mapping relationship between the channel estimation policy and the first parameter. The first parameter may be the parameter listed in Table 3 to Table 8, or may be another parameter that is not mentioned. Therefore, the content shown in Table 3 to Table 8 is merely used as an example for understanding, and is not used as a final limitation.

In a possible implementation, the parameters may be combined with each other. For example, the quantity of transmit antennas is combined with the quantity of receive antennas, the quantity of transmit antennas is combined with the quantity of ports, or the quantity of receive antennas is combined with the quantity of ports. Each parameter combination may be associated with one channel estimation policy. For example, a parameter combination 1 (for example, a quantity of receive antennas 1 and a quantity of ports 1) is associated with a channel estimation policy 1, and a parameter combination 2 (for example, a quantity of receive antennas 2 and a quantity of ports 2) is associated with a channel estimation policy 2. For specific descriptions, refer to Table 3 to Table 8. Details are not described again. Different parameter combinations may alternatively be associated with a same channel estimation policy. For example, a parameter combination 1 and a parameter combination 2 are associated with a channel estimation policy 1. This is not limited.

It should be noted that, when the first device receives the first information sent by the second device, the second device may exchange the foregoing parameter with the first device, in other words, the second device sends the first parameter to the first device, and the first device can determine the first information. Alternatively, the foregoing parameter may be preconfigured in the first device, and the first device can determine the first information based on the foregoing parameter.

S220: The second device sends a DMRS 1 to the first device.

Correspondingly, the first device receives the DMRS 1.

S230: The first device performs channel estimation based on the channel estimation policy 1 and the DMRS 1.

Specifically, before channel estimation is performed, the first device first determines, based on the first information, the channel estimation policy 1 that needs to be used, and performs channel estimation based on the channel estimation policy 1 and the DMRS 1. Compared with an existing solution in which the first device performs channel estimation based on a fixed channel estimation policy, the foregoing solution can support the first device in flexibly performing channel estimation based on different channel estimation policies, so that a channel estimation result obtained by the first device by performing channel estimation based on the channel estimation policy 1 can better match a channel condition, thereby supporting subsequent more accurate data transmission.

In the foregoing method, this embodiment of this application further supports dynamic indication of a channel estimation policy. To be specific, the channel estimation policy 1 indicated by the first information may be adjusted based on a change of a channel status. For example, the first device uses a channel estimation policy a1 (adapting to a channel condition 1) at a moment 1, and uses a channel estimation policy a2 (adapting to a channel condition 2) at a moment 2, thereby enabling adaptation to different channel conditions.

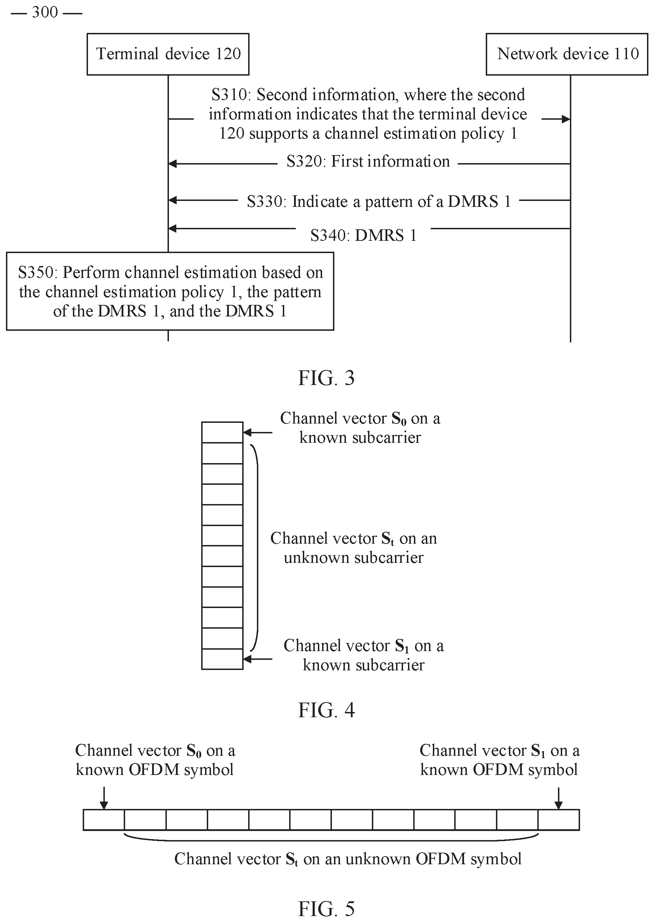

The following further describes the method in FIG. 2 with reference to FIG. 3 to FIG. 6.

FIG. 3 is a schematic interaction flowchart of a communication method 300 according to an embodiment of this application. An example in which a first device is the terminal device 120 and a second device is the network device 110 is used for description. As shown in FIG. 3, the method 300 includes the following steps.

Optionally, S310: The terminal device 120 sends second information to the network device 110, where the second information indicates that the terminal device 120 supports a channel estimation policy 1.

Correspondingly, the network device 110 receives the second information, and determines, based on the second information, that the terminal device 120 supports the channel estimation policy 1.

After the terminal device 120 initially accesses a cell, the terminal device 120 may report a channel estimation capability of the terminal device to the network device 110, that is, a supported channel estimation policy. For ease of description, the following uses an example in which the terminal device 120 reports, to the network device 110, whether the terminal device supports the channel estimation policy 1 for description, but this application is not limited thereto.

S320: The network device 110 sends first information to the terminal device 120.

Correspondingly, the terminal device 110 receives the first information.

For descriptions about how the network device 110 determines the first information, refer to the descriptions of Table 3 to Table 8. Details are not described again.

S330: The network device 110 indicates a pattern (pattern) of a DMRS 1 to the terminal device 120.

Correspondingly, the terminal device 120 determines the pattern of the DMRS 1 based on the indication of the network device 110.

In a possible implementation, that the network device 110 indicates the pattern of the DMRS 1 to the terminal device 120 may include: The network device 110 sends the pattern of the DMRS 1 to the terminal device 120; or may include: The pattern of the DMRS 1 is preconfigured in the terminal device 120, and the network device 110 sends, to the terminal device 120, indication information indicating the pattern of the DMRS 1, or the like. This is not limited.

The pattern of the DMRS 1 is used to configure the DMRS 1. For specific descriptions, refer to Table 1 and Table 2. For ease of description, the following uses an example in which a configuration type of the DMRS 1 is a type 2 double-symbol for description.

S340: The network device 110 sends the DMRS 1 to the terminal device 120.

Correspondingly, the terminal device 120 receives the DMRS 1.

S350: The terminal device 120 performs channel estimation based on the channel estimation policy 1, the pattern of the DMRS 1, and the DMRS 1.

Specifically, when the channel estimation policy 1 is a conventional channel estimation policy, the terminal device 120 performs channel estimation based on the conventional channel estimation policy. For details, refer to the existing description. When the channel estimation policy 1 is a manifold-based channel estimation policy, the terminal device 120 performs channel estimation based on the manifold-based channel estimation policy. Specifically, the following steps are included.

(1) Obtain, based on the pattern of the DMRS 1, a channel vector $\mathbf{S_0}$ and a channel vector $\mathbf{S_1}$ on a subcarrier or an orthogonal frequency division multiplexing (orthogonal frequency division multiplexing, OFDM) symbol on which the DMRS 1 is located.

(2) Obtain $\theta$ and $\phi$: $\mathbf{S_0}^{H*}\mathbf{S_1}=\cos(\theta)^*e^{(+j\phi)}$, where $\theta$ is a spatial included angle between the channel vector $\mathbf{S_0}$ and the channel vector $\mathbf{S_1}$, and $\phi$ is a propagation rotation included angle between the channel vector $\mathbf{S_0}$ and the channel vector $\mathbf{S_1}$.

$$\theta = \mathrm{acos}\left(\left|s_0^H s_1\right|\right), \quad \varphi = \mathrm{atan}\left(\frac{\mathrm{Im}(s_0^H s_1)}{\mathrm{Re}(s_0^H s_1)}\right) \quad \text{and} \quad s_0^H \quad \text{represents conjugation transposition on } \boldsymbol{s}_0.$$

(3) Calculate channel interpolation parameters $\alpha(\theta,\phi,t)$ and $\beta(\theta,\phi,t)$ between the channel vector $\mathbf{S_0}$ and the channel vector $\mathbf{S_1}$, where $t$ is a relative location between a to-be-interpolated channel vector and both the channel vector $\mathbf{S_0}$ and the channel vector $\mathbf{S_1}$, and $0 \le t \le 1$.

(a)

$$\boldsymbol{\alpha}(\theta, \phi, t) = \left( \cos(t \cdot \theta) - \cos(\theta) \cdot \frac{\sin(t \cdot \theta)}{\sin(\theta)} \right) \cdot e^{+\mathrm{j}\phi \cdot t}$$

(b)

$$\boldsymbol{\beta}(\theta, \phi, t) = \frac{\sin(t \cdot \theta)}{\sin(\theta)} \cdot e^{+\mathrm{j}\phi \cdot (t-1)}$$

(4) Calculate a channel vector $\mathbf{S_t}$ between the channel vector $\mathbf{S_0}$ and the channel vector $\mathbf{S_1}$ according to a geodesic formula, to complete channel estimation.

(5)

$$\mathbf{S_t} = \mathbf{S_0} * \boldsymbol{\alpha}(\theta,\phi,t) + \mathbf{S_1} * \boldsymbol{\beta}(\theta,\phi,t).$$

For descriptions of the channel vector $\mathbf{S_0}$, the channel vector $\mathbf{S_1}$, and the channel vector $\mathbf{S_t}$, refer to FIG. 4 and FIG. 5.

FIG. 4 is a diagram of channel estimation according to an embodiment of this application. A resource element (resource element) is a minimum unit carrying a channel vector. The resource element is a subcarrier in frequency domain, and is an OFDM symbol in time domain. Therefore, content shown in FIG. 4 is that two resource elements carrying the channel vector $\mathbf{S_0}$ and the channel vector $\mathbf{S_0}$ have a same time domain location (that is, a same OFDM symbol), but have different frequency domain locations (that is, different subcarriers). An example in which the terminal device 120 determines the channel vector $\mathbf{S_0}$ and the channel vector $\mathbf{S_1}$ is used for description. Specifically, the terminal device 120 determines, based on the pattern of the DMRS 1, locations (a same time domain location) of subcarriers on which the channel vector $\mathbf{S_0}$ and the channel vector $\mathbf{S_1}$ are located, determines specific values of the channel vector $\mathbf{S_0}$ and the channel vector $\mathbf{S_1}$ based on the received DMRS 1, and may determine a value of the channel vector $\mathbf{S_t}$ between the channel vector $\mathbf{S_0}$ and the channel vector $\mathbf{S_1}$ according to the foregoing formula, to complete channel estimation.

FIG. 5 is a diagram of channel estimation according to an embodiment of this application. A resource element is a minimum unit carrying a channel vector. The resource element is a subcarrier in frequency domain, and is an OFDM symbol in time domain. Therefore, content shown in FIG. 5 is that two resource elements carrying the channel vector $\mathbf{S_0}$ and the channel vector $\mathbf{S_0}$ have a same frequency domain location (that is, a same subcarrier), but have different time domain locations (that is, different OFDM symbols). An example in which the terminal device 120 determines the channel vector $\mathbf{S_0}$ and the channel vector $\mathbf{S_1}$ is used for description. Specifically, the terminal device 120 determines, based on the pattern of the DMRS 1, locations of OFDM symbols on which the channel vector $\mathbf{S_0}$ and the channel vector $\mathbf{S_1}$ are located, determines specific values of the channel vector $\mathbf{S_0}$ and the channel vector $\mathbf{S_1}$ based on the received DMRS 1, and may determine a value of the channel vector $\mathbf{S_t}$ between the channel vector $\mathbf{S_0}$ and the channel vector $\mathbf{S_1}$ according to the foregoing formula, to complete channel estimation.

In conclusion, before channel estimation is performed, the terminal device 120 determines, based on the first information, the channel estimation policy that needs to be used, and performs channel estimation based on the channel estimation policy and the DMRS 1. Compared with an existing solution in which the terminal device 120 performs channel estimation based on a fixed channel estimation policy, the foregoing solution can support the terminal device 120 in flexibly performing channel estimation based on different channel estimation policies, so that a channel estimation result obtained by the terminal device 120 by performing channel estimation based on the channel estimation policy 1 can better match a channel condition, thereby supporting subsequent more accurate data transmission.

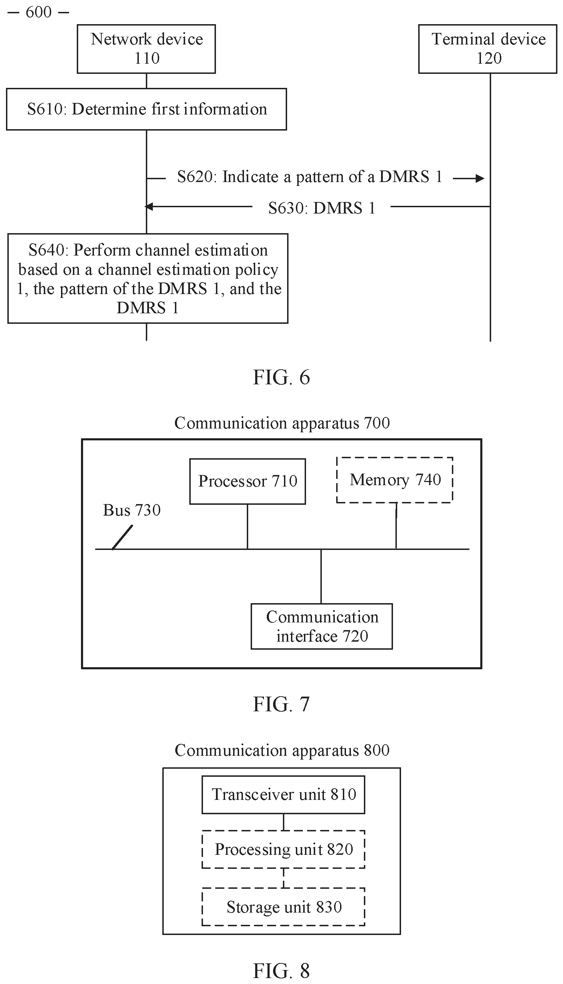

FIG. 6 is a schematic interaction flowchart of a communication method 600 according to an embodiment of this application. An example in which a second device is the terminal device 120 and a first device is the network device 110 is used for description. As shown in FIG. 6, the method 600 includes the following steps.

S610: The network device 110 determines first information.

Specifically, the network device 110 may determine the first information based on the content shown in Table 3 to Table 8.

S620: The network device 110 indicates a pattern of a DMRS 1 to the terminal device 120.

Correspondingly, the terminal device 120 determines the pattern of the DMRS 1 based on the indication of the network device 110.

For descriptions of S620, refer to S330. Details are not described again.

S630: The terminal device 120 sends the DMRS 1 to the network device 110.

Specifically, the terminal device 120 sends the DMRS 1 to the network device 110 based on the pattern of the DMRS 1. Correspondingly, the network device 110 receives the DMRS 1.

S640: The network device 110 performs channel estimation based on a channel estimation policy 1 and the DMRS 1.

Specifically, when the channel estimation policy 1 is a conventional channel estimation policy, the network device 110 performs channel estimation based on the conventional channel estimation policy. For details, refer to the existing description. When the channel estimation policy 1 is a manifold-based channel estimation policy, the network device 110 performs channel estimation based on the manifold-based channel estimation policy. Specifically, the following steps are included.

(1) Obtain, based on the pattern of the DMRS 1, a channel vector $S_0$ and a channel vector $S_1$ on a subcarrier or an OFDM symbol on which the DMRS 1 is located.

(2) Obtain $\theta$ and $\phi$: $S_0^H * S_1 = \cos(\theta) * e^{(+j\phi)}$.

(3) Calculate channel interpolation parameters $\alpha(\theta,\phi,t)$ and $\beta(\theta,\phi,t)$ between $S_0$ and $S_1$.

(a)

$$\alpha(\theta,\phi,t) = (\cos(t\cdot\theta) - \cos(\theta) \cdot \sin(t\cdot\theta)/\sin(\theta)) \cdot e^{(+j\phi\cdot t)}$$

(b)

$$\beta(\theta,\phi,t) = \sin(t\cdot\theta)/\sin(\theta) \cdot e^{(+j\phi\cdot(t-1))}$$

(4) Calculate a channel vector St between the channel vector $S_0$ and the channel vector $S_1$ according to a geodesic formula, where $0 \leq t \leq 1$, to complete channel estimation.

(5)

$$S_t = S_t = S_0 * \alpha(\theta,\phi,t) + S_1 * \beta(\theta,\phi,t).$$

For specific descriptions of the foregoing steps, refer to the foregoing descriptions of FIG. 3. Details are not described again.

In conclusion, before channel estimation is performed, the network device 110 determines, based on the first information, the channel estimation policy 1 that needs to be used, and performs channel estimation based on the channel estimation policy 1 and the DMRS 1. Compared with an existing solution in which the network device 110 performs channel estimation based on a fixed channel estimation policy, the foregoing solution can support the network device 110 in flexibly performing channel estimation based on different channel estimation policies, so that a channel estimation result obtained by the network device 110 by performing channel estimation based on the channel estimation policy 1 can better match a channel condition, thereby supporting subsequent more accurate data transmission.

In the foregoing solution, the first information may be explicitly or implicitly indicated, or may be configured in a pre configuration manner. For the explicit indication, this application supports explicitly indicating the first information via a specific field (for example, by using a method such as a bit). For the implicit indication, the first device and the second device may agree on selection conditions (for example, channel frequency domain flatness and a pilot frequency domain density) corresponding to different channel estimation policies, and the first device or the second device determines a corresponding channel estimation policy based on the selection conditions. For the preconfiguration manner, this application supports preconfiguration in an existing manner.

In addition, the first information and/or second information may be signaling such as downlink control information (downlink control information, DCI), uplink control information (uplink control information, UCI), a media access control-control element (media access control-control element, MAC-CE), or radio resource control information (radio resource control information, RRC).

It should be noted that the foregoing solution is described by using the manifold-based channel estimation policy as an example, but another possible scenario is not limited. In addition, the foregoing method is also applicable to time domain filtering interpolation and PUSCH channel estimation. Details are not described again. Specifically, when the foregoing method is applied to PUSCH channel estimation, the first information is determined by the network device and does not need to be indicated to the terminal device. In addition, the two solutions are similar.

Finally, apparatus embodiments in embodiments of this application are described.

To implement functions in the method provided in this application, each of the first device and the second device may include a hardware structure and/or a software module, to implement the foregoing functions in a form of the hardware structure, the software module, or a combination of the hardware structure and the software module. Whether a function in the foregoing functions is performed by the hardware structure, the software module, or the combination of the hardware structure and the software module depends on particular applications and design constraints of the technical solutions.

FIG. 7 is a block diagram of a communication apparatus 700 according to an embodiment of this application. The communication apparatus 700 includes a processor 710 and a communication interface 720. The processor 710 and the communication interface 720 may be connected to each other through a bus 730. The communication apparatus 700 may be a first device or a second device.

Optionally, the communication apparatus 700 may further include a memory 740. The memory 740 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 740 is used for related instructions and data.

The processor 710 may be one or more central processing units (central processing unit, CPU). When the processor 710 is one CPU, the CPU may be a single-core CPU or may be a multicore CPU.

When the communication apparatus 700 is a first device, for example, the processor 710 is configured to perform the following operations: obtaining first information, receiving a DMRS 1, performing channel estimation based on a channel estimation policy 1 and the DMRS 1, and the like.

When the communication apparatus 700 is a second device, for example, the processor 710 is configured to perform the following operation: sending first information, a DMRS 1, and the like.

The content is merely used as an example for description. When the communication apparatus 700 is the first device/second device, the communication apparatus is responsible for performing the methods or steps related to the first device/second device in the foregoing method embodiments.

The foregoing descriptions are merely examples for description. For specific content, refer to the content shown in the method embodiments. For implementation of each operation in FIG. 7, refer to the corresponding description of the method embodiments shown in FIG. 2 to FIG. 6.

FIG. 8 is a block diagram of a communication apparatus 800 according to an embodiment of this application. The communication apparatus 800 may be a first device/second device, or may be a chip or a module in a first device/second device, and is configured to implement the methods in the foregoing embodiments. The communication apparatus 800 includes a transceiver unit 810 and a processing unit 820. The following describes the transceiver unit 810 and the processing unit 820 by using examples.

The transceiver unit 810 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. A unified description is provided herein, and details are not described below again.

When the communication apparatus 800 is a first device, for example, the processing unit 820 is configured to perform channel estimation based on a channel estimation policy 1 and a DMRS 1. The transceiver unit 810 is configured to obtain first information, the DMRS 1, and the like.

When the communication apparatus 800 is a second device, for example, the transceiver unit 810 is configured to send first information, a DMRS 1, and the like.

The content is merely used as an example for description. When the communication apparatus 800 is the first device/second device, the communication apparatus is responsible for performing the methods or steps related to the first device/second device in the foregoing method embodiments.

Optionally, the communication apparatus 800 further includes a storage unit 830. The storage unit 830 is configured to store a program or code used to perform the foregoing method.

The apparatus embodiments shown in FIG. 7 and FIG. 8 are used to implement the content shown in FIG. 2 to FIG. 6. For specific execution steps and methods of the apparatuses shown in FIG. 7 and FIG. 8, refer to the content described in the foregoing method embodiments.

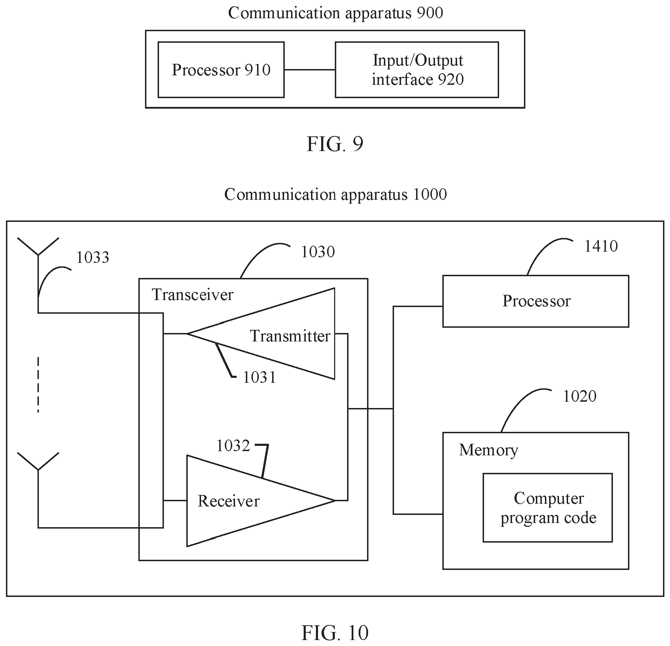

FIG. 9 is a block diagram of a communication apparatus 900 according to an embodiment of this application. The communication apparatus 900 is configured to implement a function of a first device/second device. The communication apparatus 900 may be a chip in the first device/second device.

The communication apparatus 900 includes an input/output interface 920 and a processor 910. The input/output interface 920 may be an input/output circuit. The processor 910 may be a signal processor, a chip, or another integrated circuit that can implement the method in this application. The input/output interface 920 is configured to input or output a signal or data.

For example, when the communication apparatus 900 is a first device, the input/output interface 920 is configured to obtain first information and a DMRS 1. The processor 910 is configured to perform channel estimation based on a channel estimation policy 1 and the DMRS 1. The processor 910 is further configured to perform some or all steps of any method provided in this application.

For example, when the communication apparatus 900 is a second device, the input/output interface 920 is configured to send first information and a DMRS 1. In addition, the processor 910 is further configured to perform some or all steps of any method provided in this application.

In a possible implementation, the processor 910 executes instructions stored in a memory, to implement a function implemented by a network device or a terminal device.

Optionally, the communication apparatus 900 further includes the memory.

Optionally, the processor and the memory are integrated together.

Optionally, the memory is outside the communication apparatus 900.

In a possible implementation, the processor 910 may be a logic circuit, and the processor 910 inputs/outputs a message or signaling through the input/output interface 920. The logic circuit may be a signal processor, a chip, or another integrated circuit that can implement the method in embodiments of this application.

The foregoing description of the communication apparatus 900 is merely an example for description. The communication apparatus 900 can be configured to perform the methods in the foregoing embodiments. For specific content, refer to the descriptions in the foregoing method embodiments. Details are not described herein again.

FIG. 10 is a block diagram of a communication apparatus 1000 according to an embodiment of this application. The communication apparatus 1000 may be a network device or a chip in a network device. The communication apparatus 1000 is configured to perform the operations performed by the network device in the method embodiments shown in FIG. 2 to FIG. 6.

When the communication apparatus 1000 is a network device, for example, a base station, FIG. 10 is a simplified diagram of a structure of the base station. The base station includes a module 1010, a module 1020, and a module 1030. The module 1010 is mainly configured to: perform baseband processing, control the base station, and the like. The module 1010 is usually a control center of the base station, may be usually referred to as a processor, and is configured to control the base station to perform a processing operation on a network device side in the foregoing method embodiments. The module 1020 is mainly configured to store computer program code and data. The module 1030 is mainly configured to: receive and send a radio frequency signal and perform conversion between the radio frequency signal and a baseband signal. The module 1030 may be usually referred to as a transceiver module, a transceiver machine, a transceiver circuit, a transceiver, or the like. The transceiver module of the module 1030 may also be referred to as a transceiver machine, a transceiver, or the like, and includes an antenna 1033 and a radio frequency circuit (not shown in FIG. 10). The radio frequency circuit is mainly configured to perform radio frequency processing. Optionally, in the module 1030, a component configured to implement a receiving function may be considered as a receiver, and a component configured to implement a sending function may be considered as a transmitter. In other words, the module 1030 includes the receiver 1032 and the transmitter 1031. The receiver may also be referred to as a receiving module, a receiver machine, a receiver circuit, or the like, and the transmitter may be referred to as a transmitting module, a transmitter machine, a transmitter circuit, or the like.

The module 1010 and the module 1020 may include one or more boards, and each board may include one or more processors and one or more memories. The processor is configured to read and execute a program in the memory, to implement a baseband processing function and control the base station. If there are a plurality of boards, the boards may be interconnected to enhance a processing capability. In an optional implementation, a plurality of boards may share one or more processors, or a plurality of boards share one or more memories, or a plurality of boards share one or more processors at the same time.

For example, in an implementation, the transceiver module of the module 1030 is configured to perform receiving/sending-related processes performed by the network device in the embodiments shown in FIG. 2 to FIG. 6. The processor of the module 1010 is configured to perform a processing-related process performed by the network device in the embodiments shown in FIG. 2 to FIG. 6.

In another implementation, the processor of the module 1010 is configured to perform a processing-related process performed by the communication device in the embodiments shown in FIG. 2 to FIG. 6.

In another implementation, the transceiver module of the module 1030 is configured to perform sending/receiving-related processes performed by the communication device in the embodiments shown in FIG. 2 to FIG. 6.

It should be understood that FIG. 10 is merely an example rather than a limitation. The network device including the processor, the memory, and the transceiver may not depend on the structures shown in FIG. 7 to FIG. 9.

When the communication apparatus 1000 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

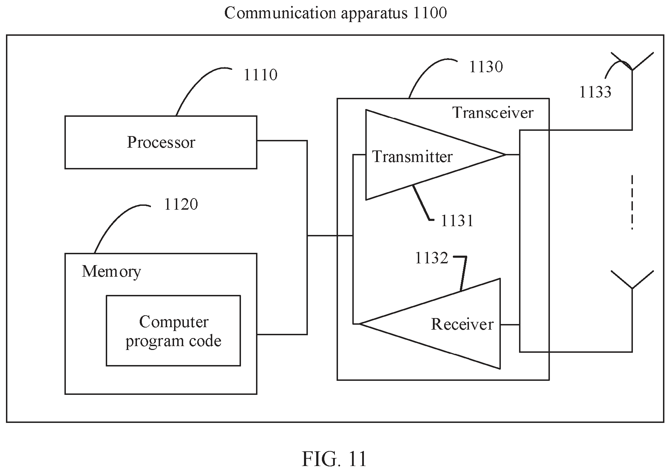

FIG. 11 is a block diagram of a communication apparatus 1100 according to an embodiment of this application.

The communication apparatus 1100 may be a terminal device, a processor of a terminal device, or a chip. The communication apparatus 1100 may be configured to perform an operation performed by the terminal device or the communication device in the foregoing method embodiments.

When the communication apparatus 1100 is a terminal device, FIG. 11 is a simplified diagram of a structure of the terminal device. As shown in FIG. 11, the terminal device includes a processor, a memory, and a transceiver. The memory may store computer program code. The transceiver includes a transmitter 1131, a receiver 1132, a radio frequency circuit (not shown in FIG. 11), an antenna 1133, and an input/output apparatus (not shown in FIG. 11).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive or send a radio frequency signal in a form of an electromagnetic wave. The input/output apparatus, for example, a touchscreen, a display, or a keyboard, is mainly configured to: receive data input by a user and output data to the user. It should be noted that some types of terminal devices may have no input/output apparatus.

When data needs to be sent, the processor performs baseband processing on the to-be-sent data, and then outputs a baseband signal to the radio frequency circuit. The radio frequency circuit performs radio frequency processing on the baseband signal, and then sends a radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 11 shows only one memory, one processor, and one transceiver. In an actual terminal device product, there may be one or more processors and one or more memories. The memory may also be referred to as a storage medium, a storage device, or the like. The memory may be disposed independently of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 11, the terminal device includes the processor 1110, the memory 1120, and the transceiver 1130. The processor 1110 may also be referred to as a processing unit, a processing board, a processing module, a processing apparatus, or the like. The transceiver 1130 may also be referred to as a transceiver unit, a transceiver machine, a transceiver apparatus, or the like.

Optionally, a component configured to implement a receiving function in the transceiver 1130 may be considered as a receiving module, and a component configured to implement a sending function in the transceiver 1130 may be considered as a sending module. In other words, the transceiver 1130 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 1110 is configured to perform processing actions of the terminal device in the embodiments shown in FIG. 2 to FIG. 6, and the transceiver 1130 is configured to perform receiving and sending actions of the terminal device in FIG. 2 to FIG. 6.

For example, in an implementation, the processor 1110 is configured to perform processing actions of the terminal device in the embodiments shown in FIG. 2 to FIG. 6, and the transceiver 1130 is configured to perform receiving and sending actions of the terminal device in FIG. 2 to FIG. 6.

It should be understood that FIG. 11 is merely an example rather than a limitation. The terminal device including the transceiver module and the processing module may not depend on the structures shown in FIG. 7 to FIG. 9.

When the communication apparatus 1100 is a chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

This application further provides a chip, including a processor. The processor is configured to invoke, from a memory, instructions stored in the memory and run the instructions, to enable a communication device on which the chip is installed to perform the methods in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the methods in the foregoing examples. Optionally, the chip further includes the memory. The memory is configured to store a computer program or the code.

This application further provides a processor, configured to be coupled to a memory, and configured to perform a method and a function that are related to the network device or the terminal device in any one of the foregoing embodiments.

Another embodiment of this application provides a computer program product including instructions. When the computer program product runs on a computer, the method in the foregoing embodiment is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the scope of this application.

It may be clearly understood by a person skilled in the art that, for ease and brevity of description, for a detailed working process of foregoing system, apparatus, and unit, refer to a corresponding process in the foregoing method embodiments. Details are not described herein again.

In several embodiments provided in this application, the disclosed system, apparatus, and method may be implemented in another manner. For example, the described apparatus embodiments are merely examples. For example, division into the units is merely logic function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, in other words, may be located in one location, or may be distributed on a plurality of network units. Some or all of the units may be selected based on an actual requirement to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, a network device) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

**Claims**

1. A communication method, wherein the method is applied to a first device side, and the method comprises:

   obtaining first information, wherein the first information indicates a channel estimation policy;
   receiving a demodulation reference signal from a second device; and
   performing channel estimation based on the channel estimation policy and the demodulation reference signal.

2. The method according to claim 1, wherein obtaining the first information comprises:
   receiving the first information from the second device.

**3.** The method according to claim 1, wherein obtaining the first information comprises:
determining the first information based on a mapping relationship between a first parameter and the channel estimation policy and the first parameter.

**4.** The method according to claim 3, wherein the first parameter comprises at least one of the following:
a quantity of transmit antennas of the second device, a quantity of receive antennas of the first device, a quantity of ports, a port sequence number, or a frequency domain density of the demodulation reference signal.

**5.** The method according to any one of claims 1 to 4, wherein the method further comprises:

obtaining a pattern of the demodulation reference signal; and
performing channel estimation based on the channel estimation policy and the demodulation reference signal comprises:

obtaining a channel interpolation parameter of the demodulation reference signal based on the channel estimation policy and the pattern of the demodulation reference signal; and
performing channel estimation based on the channel interpolation parameter.

**6.** The method according to any one of claims 1 to 5, wherein the method further comprises:
sending second information to the second device, wherein the second information indicates that the channel estimation policy is supported.

**7.** The method according to any one of claims 1 to 6, wherein the channel estimation policy comprises either of the following:
a conventional channel estimation policy or a manifold-based channel estimation policy.

**8.** A communication method, wherein the method is applied to a second device side, and the method comprises:

sending first information to a first device, wherein the first information indicates a channel estimation policy; and
sending a demodulation reference signal to the first device, wherein
the channel estimation policy and the demodulation reference signal are used by the first device to perform channel estimation.

**9.** The method according to claim 8, wherein the method further comprises:

obtaining a first parameter; and
determining the first information based on a mapping relationship between the first parameter and the channel estimation policy and the first parameter.

**10.** The method according to claim 9, wherein the first parameter comprises at least one of the following:
a quantity of transmit antennas of the second device, a quantity of receive antennas of the first device, a quantity of ports, a port sequence number, or a frequency domain density of the demodulation reference signal.

**11.** The method according to any one of claims 8 to 10, wherein the method further comprises:
receiving second information, wherein the second information indicates that the channel estimation policy is supported.

**12.** The method according to any one of claims 8 to 11, wherein the channel estimation policy comprises either of the following:
a conventional channel estimation policy or a manifold-based channel estimation policy.

**13.** A communication apparatus, comprising:

a processing unit, configured to obtain first information, wherein the first information indicates a channel estimation policy; and
a transceiver unit, configured to receive a demodulation reference signal, wherein
the processing unit is further configured to perform channel estimation based on the channel estimation policy and the demodulation reference signal.

14. The apparatus according to claim 13, wherein the transceiver unit is further configured to receive the first information.

15. The apparatus according to claim 13, wherein the processing unit is further configured to determine the first information based on a mapping relationship between a first parameter and the channel estimation policy and the first parameter.

16. The apparatus according to claim 15, wherein the first parameter comprises at least one of the following:
a quantity of transmit antennas of a second device, a quantity of receive antennas of a first device, a quantity of ports, a port sequence number, or a frequency domain density of the demodulation reference signal.

17. The apparatus according to any one of claims 13 to 16, wherein the transceiver unit is further configured to:

obtain a pattern of the demodulation reference signal; and
the processing unit is further configured to:

obtain a channel interpolation parameter of the demodulation reference signal based on the channel estimation policy and the pattern of the demodulation reference signal; and
perform channel estimation based on the channel interpolation parameter.

18. The apparatus according to any one of claims 13 to 17, wherein the transceiver unit is further configured to:
send second information, wherein the second information indicates that the channel estimation policy is supported.

19. The method according to any one of claims 13 to 18, wherein the channel estimation policy comprises either of the following:
a conventional channel estimation policy or a manifold-based channel estimation policy.

20. A communication apparatus, comprising:

a transceiver unit, configured to send first information, wherein the first information indicates a channel estimation policy; and
the transceiver unit is further configured to send a demodulation reference signal, wherein
the channel estimation policy and the demodulation reference signal are used to perform channel estimation.

21. The apparatus according to claim 20, wherein the communication apparatus further comprises a processing unit;

the transceiver unit is further configured to receive a first parameter; and
the processing unit is configured to determine the first information based on a mapping relationship between the first parameter and the channel estimation policy and the first parameter.

22. The apparatus according to claim 21, wherein the first parameter comprises at least one of the following:
a quantity of transmit antennas of a second device, a quantity of receive antennas of a first device, a quantity of ports, a port sequence number, or a frequency domain density of the demodulation reference signal.

23. The apparatus according to any one of claims 20 to 22, wherein the transceiver unit is further configured to:
receive second information, wherein the second information indicates that the channel estimation policy is supported.

24. The apparatus according to any one of claims 20 to 23, wherein the channel estimation policy comprises either of the following:
a conventional channel estimation policy or a manifold-based channel estimation policy.

25. A communication apparatus, comprising a processor, wherein the processor is configured to enable: by executing a computer program or instructions or via a logic circuit,

the communication apparatus to perform the method according to any one of claims 1 to 7, or
the communication apparatus to perform the method according to any one of claims 8 to 12.

26. The communication apparatus according to claim 25, wherein the communication apparatus further comprises a memory, and the memory is configured to store the computer program or the instructions.

27. The communication apparatus according to claim 25 or 26, wherein the communication apparatus further comprises a communication interface, and the communication interface is configured to input and/or output a signal.

28. A communication apparatus, comprising a logic circuit and an input/output interface, wherein the input/output interface is configured to input and/or output a signal; and

   the logic circuit is configured to perform the method according to any one of claims 1 to 7; or
   the logic circuit is configured to perform the method according to any one of claims 8 to 12.

29. A computer-readable storage medium, wherein the computer-readable storage medium stores a computer program or instructions, and when the computer program or the instructions are run on a computer,

   the method according to any one of claims 1 to 7 is performed, or
   the method according to any one of claims 8 to 12 is performed.

30. A computer program product, comprising instructions, wherein when the instructions are run on a computer,

   the method according to any one of claims 1 to 7 is performed, or
   the method according to any one of claims 8 to 12 is performed.

31. A communication system, comprising a first device and a second device, wherein

   the first device is configured to obtain first information, wherein the first information indicates a channel estimation policy;
   the second device is configured to send a received demodulation reference signal to the first device;
   the first device is configured to receive the demodulation reference signal; and
   the first device is configured to perform channel estimation based on the channel estimation policy and the demodulation reference signal.

32. The system according to claim 31, wherein

   the second device is configured to send the first information to the first device; and
   the first device is configured to receive the first information.

33. The system according to claim 32, wherein the first device is further configured to:
   determine the first information based on a mapping relationship between a first parameter and the channel estimation policy and the first parameter.

34. The system according to claim 33, wherein the first parameter comprises at least one of the following:
   a quantity of transmit antennas of the second device, a quantity of receive antennas of the first device, a quantity of ports, a port sequence number, or a frequency domain density of the demodulation reference signal.

35. The method according to any one of claims 31 to 34, wherein

   the first device is further configured to obtain a pattern of the demodulation reference signal;
   the first device is further configured to obtain a channel interpolation parameter of the demodulation reference signal based on the channel estimation policy and the pattern of the demodulation reference signal; and
   the first device is further configured to perform channel estimation based on the channel interpolation parameter.

36. The system according to any one of claims 31 to 35, wherein

   the first device is further configured to send second information to the second device, wherein the second information indicates that the channel estimation policy is supported; and
   the second device is further configured to receive the second information.

37. The system according to any one of claims 31 to 36, wherein the channel estimation policy comprises either of the following:
   a conventional channel estimation policy or a manifold-based channel estimation policy.

FIG. 1

FIG. 2

— 300 —

| Terminal device 120 | | Network device 110 |

S310: Second information, where the second information indicates that the terminal device 120 supports a channel estimation policy 1

S320: First information

S330: Indicate a pattern of a DMRS 1

S340: DMRS 1

S350: Perform channel estimation based on the channel estimation policy 1, the pattern of the DMRS 1, and the DMRS 1

FIG. 3

Channel vector $S_0$ on a known subcarrier

Channel vector $S_t$ on an unknown subcarrier

Channel vector $S_1$ on a known subcarrier

FIG. 4

Channel vector $S_0$ on a known OFDM symbol

Channel vector $S_1$ on a known OFDM symbol

Channel vector $S_t$ on an unknown OFDM symbol

FIG. 5

— 600 —

```
┌──────────────────┐                              ┌──────────────────┐
│  Network device  │                              │  Terminal device │
│       110        │                              │       120        │
└──────────────────┘                              └──────────────────┘

┌──────────────────────────────┐
│ S610: Determine first information │
└──────────────────────────────┘

        S620: Indicate a pattern of a DMRS 1  ⟶

        ⟵       S630: DMRS 1

┌────────────────────────────────┐
│ S640: Perform channel estimation │
│ based on a channel estimation policy │
│ 1, the pattern of the DMRS 1, and the │
│          DMRS 1                 │
└────────────────────────────────┘
```

FIG. 6

Communication apparatus 700

```
┌──────────────────────────────────────────────────┐
│                                                    │
│        ┌──────────────┐      ┌ ─ ─ ─ ─ ─ ─ ┐       │
│        │ Processor 710 │      │ Memory 740  │       │
│        └──────────────┘      └ ─ ─ ─ ─ ─ ─ ┘       │
│ Bus 730                                            │
│   ────────────────────────────────────────────    │
│      /                                             │
│                  ┌──────────────┐                  │
│                  │ Communication │                  │
│                  │ interface 720 │                  │
│                  └──────────────┘                  │
└──────────────────────────────────────────────────┘
```

FIG. 7

Communication apparatus 800

```
┌──────────────────────────────┐
│   ┌──────────────────────┐    │
│   │  Transceiver unit 810 │    │
│   └──────────────────────┘    │
│   ┌ ─ ─ ─ ─ ─ ─ ─ ─ ─ ─ ┐    │
│   │  Processing unit 820 │    │
│   └ ─ ─ ─ ─ ─ ─ ─ ─ ─ ─ ┘    │
│   ┌ ─ ─ ─ ─ ─ ─ ─ ─ ─ ─ ┐    │
│   │   Storage unit 830   │    │
│   └ ─ ─ ─ ─ ─ ─ ─ ─ ─ ─ ┘    │
└──────────────────────────────┘
```

FIG. 8

Communication apparatus 900

FIG. 9

Communication apparatus 1000

FIG. 10

Communication apparatus 1100

FIG. 11

## INTERNATIONAL SEARCH REPORT

| International application No. |
| --- |
| **PCT/CN2023/116297** |

### A. CLASSIFICATION OF SUBJECT MATTER

H04L 25/02(2006.01)i

According to International Patent Classification (IPC) or to both national classification and IPC

### B. FIELDS SEARCHED

Minimum documentation searched (classification system followed by classification symbols)

IPC: H04L,H04W

Documentation searched other than minimum documentation to the extent that such documents are included in the fields searched

Electronic data base consulted during the international search (name of data base and, where practicable, search terms used)

DWPI, CNTXT, ENTXTC: 不同, 参数, 策略, 常规, 传统, 端口数, 对应, 多, 方案, 方法, 技术, 解调参考信号, 频域密度, 算法, 天线数, 信道估计, 映射, 指示, DMRS, MIMO, DM-RS, different, parameter?, strateg???, conventional, legacy, correspond +, multiple, scheme?, technique, demodulation reference signal, frequency domain density, algorithm, number, antenna?, port?, channel estimat+, mapping, indicat+

### C. DOCUMENTS CONSIDERED TO BE RELEVANT

| Category* | Citation of document, with indication, where appropriate, of the relevant passages | Relevant to claim No. |
| --- | --- | --- |
| X | WO 2022165671 A1 (HUAWEI TECHNOLOGIES CO., LTD.) 11 August 2022 (2022-08-11) description, paragraphs 75-79 and 112-208 | 1-37 |
| X | CN 102498734 A (NORTEL NETWORKS CORP.) 13 June 2012 (2012-06-13) description, paragraphs 24-36 | 1-3, 5-9, 11-15, 17-21, 23-33, 35-37 |
| A | CN 114500184 A (DATANG MOBILE COMMUNICATIONS EQUIPMENT CO., LTD.) 13 May 2022 (2022-05-13) entire document | 1-37 |
| A | CN 114600384 A (HUAWEI TECHNOLOGIES CO., LTD.) 07 June 2022 (2022-06-07) entire document | 1-37 |
| A | US 2023050382 A1 (QUALCOMM INC.) 16 February 2023 (2023-02-16) entire document | 1-37 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 May 2024** | **16 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/116297**

| Patent document cited in search report | | | Publication date (day/month/year) | Patent family member(s) | | | Publication date (day/month/year) |
|---|---|---|---|---|---|---|---|
| WO | 2022165671 | A1 | 11 August 2022 | CN | 116671055 | A | 29 August 2023 |
| CN | 102498734 | A | 13 June 2012 | CA | 2768150 | A1 | 20 January 2011 |
| | | | | RU | 2012103504 | A | 20 January 2014 |
| | | | | JP | 2012533257 | A | 20 December 2012 |
| | | | | KR | 20150001087 | U | 11 March 2015 |
| | | | | US | 2012115470 | A1 | 10 May 2012 |
| | | | | KR | 20150040321 | A | 14 April 2015 |
| | | | | BR | 112012001022 | A2 | 15 March 2016 |
| | | | | US | 2013010907 | A1 | 10 January 2013 |
| | | | | WO | 2011007258 | A2 | 20 January 2011 |
| | | | | KR | 20120062693 | A | 14 June 2012 |
| | | | | EP | 2454901 | A2 | 23 May 2012 |
| CN | 114500184 | A | 13 May 2022 | | None | | |
| CN | 114600384 | A | 07 June 2022 | WO | 2021081847 | A1 | 06 May 2021 |
| US | 2023050382 | A1 | 16 February 2023 | WO | 2023019056 | A1 | 16 February 2023 |
| | | | | CN | 117795893 | A | 29 March 2024 |

Form PCT/ISA/210 (patent family annex) (July 2022)